# EUROPEAN PATENT APPLICATION

(11) **EP 4 834 613 A1**
(43) Date of publication of application: **04.11.2026**
(21) Application number: 24912042.9
(22) Date of filing: 08.11.2024
(51) Int. Cl.: B60K 1/04, B60K 1/02, E02F 9/02, F16H 57/02

(54) **ELECTRIC TRACTOR**

(30) Priority: 27.12.2023 JP 2023221312
(71) Applicant: Kubota Corporation, Osaka-shi, Osaka 530-0011 (JP)
(72) Inventor: MATSUMOTO, Ryunosuke, Sakai-shi, Osaka 590-0908 (JP); SHIOZAKI, Masato, Sakai-shi, Osaka 590-0908 (JP); MORIOKA, Daichi, Sakai-shi, Osaka 590-0908 (JP); KAIDA, Manato, Sakai-shi, Osaka 590-0908 (JP); SERA, Takashi, Sakai-shi, Osaka 590-0908 (JP)
(74) Representative: Schlegel, Sebastian
(86) International application number: PCT/JP2024/039808
(87) International publication number: WO 2025/142149

(57) **Abstract**

Provided is an electric tractor that includes a battery 4 that stores electric power, a first electric motor M1 for travel that is driven by electric power supplied from the battery 4 that stores electric power, and a second electric motor M2 for at least one of work and hydraulic drive that is driven by electric power supplied from the battery 4 that stores electric power. The first electric motor M1 for travel and the second electric motor M2 for at least one of work and hydraulic drive have the same or substantially the same size.

## Description

### Technical Field

The present invention relates to an electric tractor.

### Background Art

For example, an electric tractor disclosed in JP 2014-143965A includes a battery, a first electric motor for travel ("travel electric motor (7)" in the document), and a second electric motor for at least one of work and hydraulic drive ("electric motor (6)" in the document).

### Prior Art Documents

### Patent Document

Patent Document 1: JP 2014-143965A

### Disclosure of the Invention

### Problem to be Solved by the Invention

A configuration in which two electric motors are provided for travel and work tends to have a problem of securing a space for placing the electric motors and reducing procurement cost. JP 2014-143965A discloses a configuration in which the two electric motors are of different types. Accordingly, motor procurement cost and the like are likely to increase, and the placement layout of the electric motors is likely to be complicated.

It is an object of the present invention to provide an electric tractor that has a simple and inexpensive configuration and in which two electric motors can be placed compactly.

### Means for Solving Problem

An electric tractor of the present invention includes: a battery that stores electric power; a first electric motor for travel that is driven by electric power supplied from the battery; and a second electric motor for at least one of work and hydraulic drive that is driven by electric power supplied from the battery, wherein the first electric motor and the second electric motor have the same or substantially the same size.

With the present invention, the first electric motor and the second electric motor have the same size, and therefore, it is sufficient that electric motors of only one type are prepared, which leads to a reduction of procurement cost and management cost. Also, the placement layout of the two electric motors is likely to be simple. In addition, a risk that a worker attaches a different type of electric motor by mistake is avoided in the assembly process. This realizes an electric tractor that has a simple and inexpensive configuration and in which two electric motors can be placed compactly.

In the present invention, it is preferable that the first electric motor and the second electric motor have the same or substantially the same capacity.

With the present invention, the first electric motor and the second electric motor have the same capacity, and therefore, it is sufficient that electric motors of only one type are prepared, which leads to a further reduction of procurement cost and management cost. Also, a risk that a worker attaches a different type of electric motor by mistake is avoided in the assembly process.

In the present invention, it is preferable that the electric tractor includes a power transmission device for transmitting power for at least one of the travel and the work, wherein the power transmission device is placed at the rear of the first electric motor and the second electric motor.

Conventionally, many power transmission mechanisms are placed in the rear portion of a tractor. With this configuration, the power transmission device is placed at the rear of the first electric motor and the second electric motor, thus making it possible to allow the configuration of the power transmission mechanisms placed in the rear portion of the tractor to remain the same as the configuration of a conventional tractor.

In the present invention, it is preferable that the power transmission device has a power transmission mechanism for transmitting the power, and a housing case for housing the power transmission mechanism, and the first electric motor and the second electric motor are supported by a front portion of the housing case in a cantilever manner.

With this configuration, the housing case firmly supports the first electric motor and the second electric motor. Also, conventionally, a housing case for a power transmission device in a tractor is often used as a frame structure. Accordingly, with this configuration, it is possible to use the housing case as both a frame structure and a support for the two electric motors.

In the present invention, it is preferable that the electric tractor includes: a travel device that is driven by the power for the travel; and an output unit for work that supplies the power for the work to a work device, wherein the power transmission device includes a first power transmission mechanism for transmitting power supplied from the first electric motor to the travel device, and a second power transmission mechanism for transmitting power supplied from the second electric motor to the output unit for work.

With this configuration, the power transmission system for travel and the power transmission system for work are completely independent. With this configuration, it is sufficient that the first electric motor and the second electric motor are each driven using only required power. That is to say, a configuration is possible in which when only power for travel is needed, only the first electric motor is driven, and when only power for work is needed, only the second electric motor is driven. Thus, electric power stored in the battery is efficiently used.

In the present invention, it is preferable that the first electric motor and the second electric motor are placed with their output shafts being located at the same or substantially the same height.

With this configuration, the placement layout of the two electric motors is likely to be simple.

In the present invention, it is preferable that the first electric motor and the second electric motor are placed with their output shafts extending in parallel in the same direction, or in substantially parallel in substantially the same direction.

With this configuration, the placement layout of the two electric motors is likely to be simple.

In the present invention, it is preferable that the first electric motor and the second electric motor are placed side by side in a left-right direction.

With this configuration, the placement layout of the two electric motors is likely to be simple.

In the present invention, it is preferable that the electric tractor includes a driving section having a floor on which a driver gets on, wherein the first electric motor and the second electric motor are placed with their upper portions being located at the same position as a position of the floor or below the floor in a vertical direction.

With this configuration, the two electric motors are placed underneath the floor. Accordingly, a space under the floor is effectively utilized, and the placement layout of the two electric motors becomes simpler.

In the present invention, it is preferable that a width in a radial direction of the first electric motor and a width in a radial direction of the second electric motor are the same or substantially the same.

With this configuration, the placement layout of the two electric motors is likely to be simple.

In the present invention, it is preferable that a width in an axial direction of the first electric motor and a width in an axial direction of the second electric motor are the same or substantially the same.

With this configuration, the placement layout of the two electric motors is likely to be simple.

In the present invention, it is preferable that the electric tractor includes: a travel device that is driven by the power for the travel; a power transmission device for transmitting the power for the travel to the travel device; and a transmission shaft for transmitting the power for the travel received from the power transmission device to the travel device, wherein the first electric motor and the second electric motor are placed between the travel device and the power transmission device, and the transmission shaft is passed between the first electric motor and the second electric motor.

With this configuration, the first electric motor, the second electric motor, and the transmission shaft are collectively placed, and the configuration of the power transmission system is likely to be compact.

In the present invention, it is preferable that the first electric motor and the second electric motor are placed on a rear side in a front-rear direction of a body relative to the battery.

With this configuration, the first electric motor and the second electric motor can be easily placed in the central region in the front-rear and the left-right directions of the electric tractor, compared with a configuration in which the first electric motor and the second electric motor are placed above or below the battery, or at the front of the battery. Thus, the center of gravity of the electric tractor is likely to be stable.

### Brief Description of the Drawings

- FIG. 1: is an overall side view of an electric tractor.
- FIG. 2: is an overall plan view of the electric tractor.
- FIG. 3: is an overall side view of the electric tractor to which a front loader is attached.
- FIG. 4: is a side view showing a battery, an electric motor, and a power transmission device.
- FIG. 5: is a plan view showing the arrangement of motors and devices therearound.
- FIG. 6: is a block diagram showing electric power systems and power systems of the electric tractor.
- FIG. 7: is a plan view showing a front frame and devices placed on the front frame.
- FIG. 8: is a cross-sectional view taken along line VIII-VIII in FIG. 7, showing the front frame and the devices placed on the front frame.

### Best Mode for Carrying out the Invention

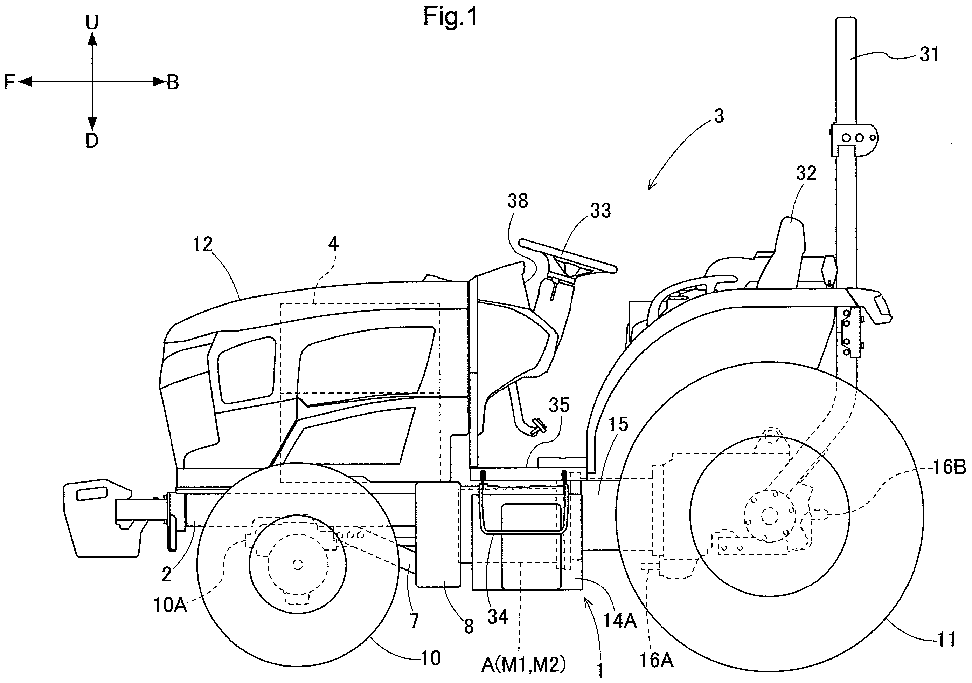

Embodiments that embody an electric tractor of the present invention will be described based on an electric tractor shown in FIGS. 1 to 8. In FIGS. 1 to 8, "F" indicates the frontward direction, "B" indicates the backward direction, "U" indicates the upward direction, "D" indicates the downward direction, "R" indicates the rightward direction, and "L" indicates the leftward direction.

### [Overall Configuration of Electric Tractor]

As shown in FIGS. 1 to 3, the electric tractor is provided with right and left front wheels 10 in the front portion of a body 1, and right and left rear wheels 11 serving as a rear travel device in the rear portion of the body 1. The body 1 supports the front wheels 10 and the rear wheels 11.

The body 1 has first front frame 2, a housing frame A, and a transmission case 15. The frame structure of the body 1 has a configuration in which the first front frame 2 is coupled to the front portion of the housing frame A, and the transmission case 15 is coupled to the rear portion of the housing frame A. The housing frame A houses an electric motor M1 and an electric motor M2 serving as power sources. The transmission case 15 corresponds to the "housing case".

A front axle case 10A is attached to the first front frame 2, and the right and left front wheels 10 are attached to the front axle case 10A. The front axle case 10A supports the left and right front wheels 10. The front axle case 10A extends in the left-right direction. The front axle case 10A supports the left and right front wheels 10 and houses an axle that transmits power to the right and left front wheels 10. The first front frame 2 supports the front axle case 10A. The front wheels 10 and the front axle case 10A are examples of the "travel device".

The transmission case 15 includes an axle case that transmits power to the left and right rear wheels 11. Thus, the transmission case 15 supports the left and right rear wheels 11. The right and left rear wheels 11 are attached to the transmission case 15. The transmission case 15 supports the left and right rear wheels 11.

The electric tractor is provided with, above the housing frame A and the transmission case 15, a driving section 3 in which a worker rides. The electric tractor is provided with, at the rear of the driving section 3, a ROPS frame 31 that is attached to the transmission case 15 and extends upward. The electric tractor includes a battery 4 that supplies electric power to the electric motors M1 and M2 and is attached to the first front frame 2, and a bonnet 12 covering the battery 4.

The battery 4 is mounted on and supported by the first front frame 2. In other words, the first front frame 2 supports the battery 4 from below. The first front frame 2 is used to support both the battery 4 and the front axle case 10A for the front wheels 10. Also, the battery 4 is located above the first front frame 2. The battery 4 stores electric power for travel, work, and hydraulic drive.

The bonnet 12 is openable and closable by being allowed to be pivoted about a lateral axis extending in the left-right direction of the body. While the bonnet 12 is closed, the battery 4 is covered by the bonnet 12.

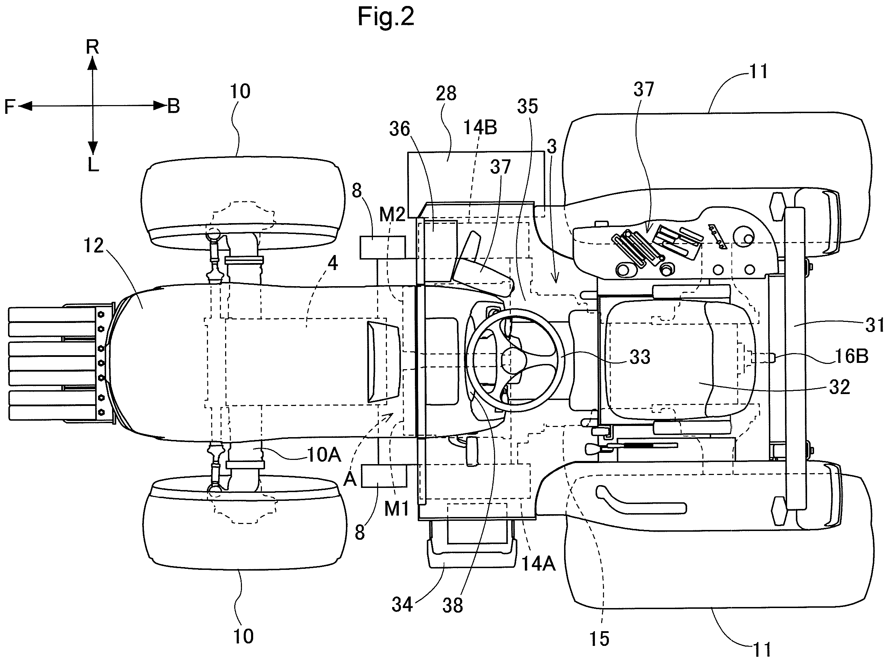

The electric tractor of this embodiment has two independent drive systems, which are a drive system for travel and a drive system for work. Specifically, as shown in FIG. 2, the electric tractor includes the electric motor M1 for travel and the electric motor M2 for work and hydraulic drive. In addition, the electric tractor includes two inverters 14A and 14B corresponding to the two electric motors M1 and M2. The two electric motors M1 and M2 are placed at the rear of the battery 4 in the front-rear direction of the body. The electric motor M1 is a motor for travel that is driven by electric power supplied from the battery 4. The electric motor M2 is a motor for work that is driven by electric power supplied from the battery 4. The inverters 14A and 14B are provided on the outer sides in the transverse direction of the body relative to the electric motors M1 and M2. The electric motor M1 corresponds to the "first electric motor". The electric motor M2 corresponds to the "second electric motor".

### [Configuration of Driving Section]

As shown in FIGS. 1 to 3, the driving section 3 is provided at the rear of the battery 4 and the bonnet 12. The driving section 3 includes the ROPS frame 31, a driver seat 32, a steering wheel 33 for steering the front wheels 10, a step 34, a floor 35, a charging socket 36, a work-travel operation member 37, a display unit 38, and the like. The housing frame A and the transmission case 15 support the driving section 3.

The step 34 serving as a footstep is attached to the right portion of the floor 35, and a worker (driver) gets on and off the driving section 3 mainly from the left of the body 1. The worker can get on the floor 35 of the driving section 3 from the step 34 and sit down on the driver seat 32.

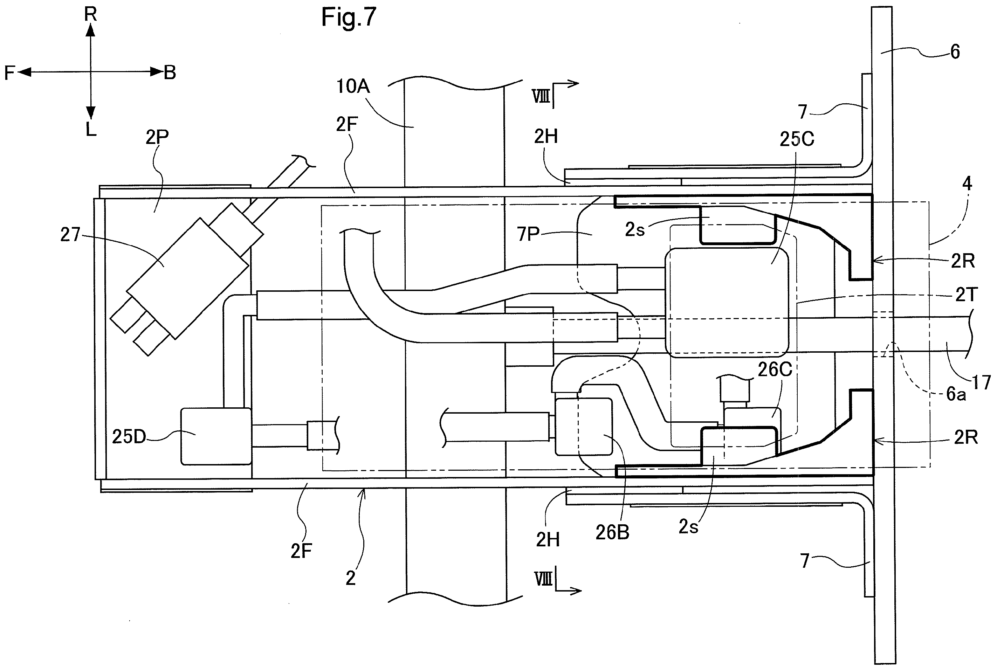

When the operator operates the steering wheel 33, the left and right front wheels 10 are steered. The steering wheel 33 is coupled to a power steering unit 27 shown in FIG. 7 via a universal joint.

Although not described in detail, the work-travel operation member 37 includes an acceleration operation member for controlling the travel speed, and an operation member for controlling the rotational speeds of a mid PTO shaft 16A and a rear PTO shaft 16B, which will be described below. This allows the operator to conduct various driving operations in the driving section 3. The work-travel operation member 37 has a potentiometer for detecting the operation amounts of these operation members.

The display unit 38 displays, for example, the travel state of the vehicle body, the work state, information (charge amount and temperature) about the battery 4, and the like.

The charging socket 36 is provided at the right of the steering wheel 33 and directly above the floor 35. The battery 4 is charged in response to insertion of an adapter of a charger into the charging socket 36 by a worker or the like. The charging socket 36 receives electric power for charging the battery 4. The specification of the charging socket 36 may be, for example, CHAdeMO, CCS2, GB/T, ChaoJi, NACS, or the like.

The housing frame A, the electric motors M1 and M2, the inverters 14A and 14B, and the transmission case 15 are placed below the floor 35. The battery 4 is placed above the floor 35. In addition, the battery 4 is provided on the front side relative to the driving section 3 such that the rear end portion of the battery 4 is located on the front side relative to the front end portions of the electric motors M1 and M2.

### [Configuration of Housing Frame]

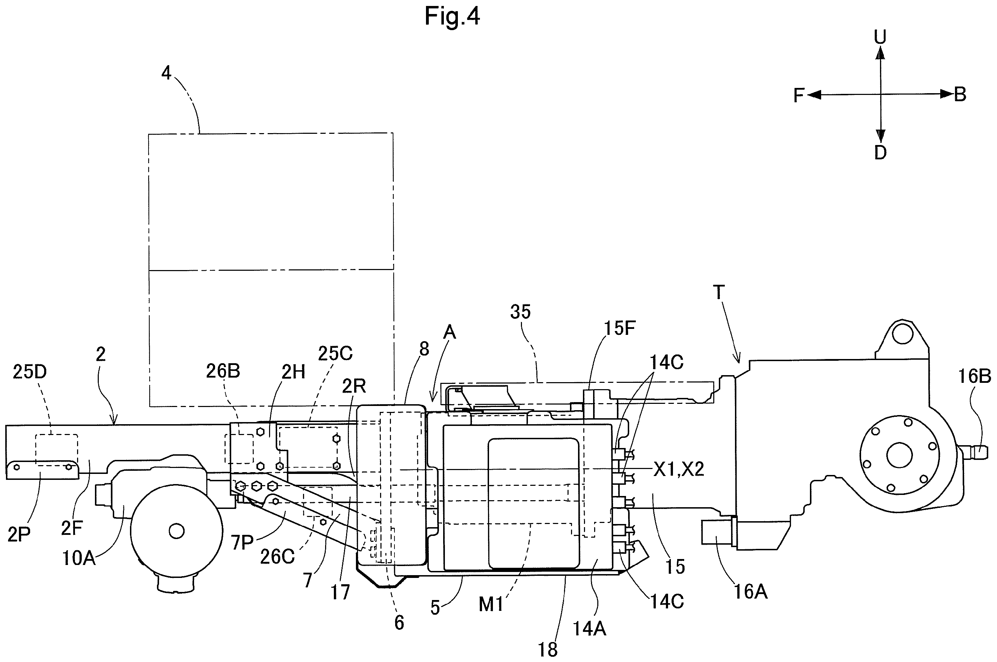

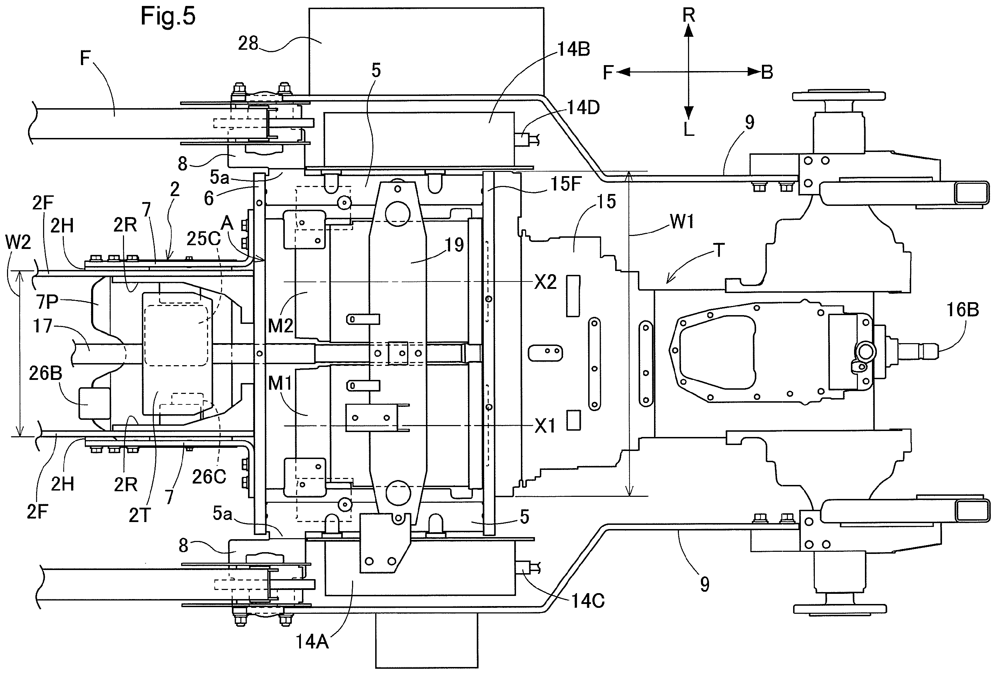

As shown in FIGS. 4 and 5, the housing frame A has a front-section frame 6, a front-wall portion 15F of the transmission case 15, a right side-section frame 5 corresponding to the right portion, a left side-section frame 5 corresponding to the left portion, an upper-section frame 19, and the like. The front-wall portion 15F of transmission case 15 is used as both a constituent element of the transmission case 15 and a constituent element of the housing frame A. The front-wall portion 15F corresponds to the "front portion of the housing case".

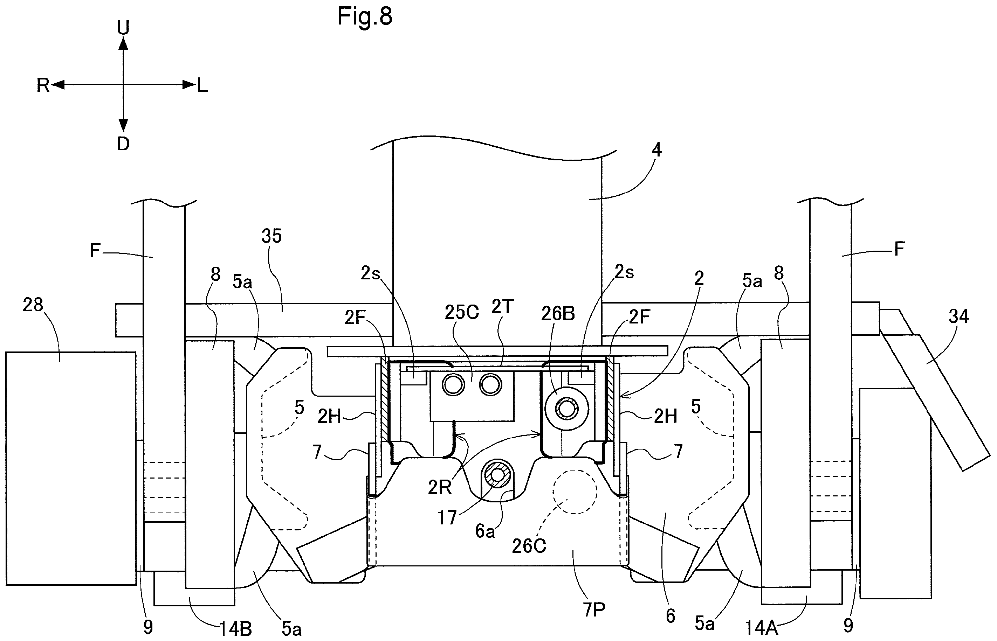

The front-section frame 6 and the front-wall portion 15F each have a flat-plate shape extending in the vertical direction and the left-right direction. The front-section frame 6 and the front-wall portion 15F each extend in the transverse direction of the body 1 from the right portion of the body 1 to the left portion thereof. The right and left side-section frames 5 each have a flat-plate shape extending in the vertical direction and the front-rear direction, and are each slightly curved (see FIG. 8). The front portions of the side-section frames 5 are coupled to the right portion and the left portion of the rear surface portion of the front-section frame 6, and the rear portions of the side-section frames 5 are coupled to the right portion and the left portion of the front surface portion of the front-wall portion 15F.

The upper-section frame 19 extends in the left-right direction from the upper portion of the right side-section frame 5 to the upper portion of the left side-section frame 5. The upper-section frame 19 is coupled to the upper portions of the right and left side-section frames 5.

A plate-shaped cover 18 serving as an electric motor protecting member is attached so as to extend from the lower portion of the right side-section frame 5 to the lower portion of the left side-section frame 5, the lower portions corresponding to the bottom portion of the housing frame A, and to extend from the lower portion of the front-section frame 6 of the housing frame A to the lower portion of the front-wall portion 15F thereof.

The front-wall portion 15F of the transmission case 15, the left and right side-section frames 5, and the front-section frame 6 surround the two electric motors M1 and M2 in a plan view. The front-wall portion 15F of the transmission case 15, the left and right side-section frames 5, the front-section frame 6, the cover 18, and the upper-section frame 19 form the housing frame A for the electric motors M1 and M2. That is to say, the frame of the tractor of this embodiment is also formed as the housing frame A that surrounds the two electric motors M1 and M2 from the front side, the rear side, the left side, the right side, the upper side, and the lower side. The housing frame A houses the electric motors M1 and M2. This reduces a risk that the two electric motors M1 and M2 come into contact with foreign matter.

The rear end portion of the first front frame 2 is coupled to the front surface portion of the front-section frame 6. The front end portions of the side-section frames 5 are coupled to the rear surface portion of the front-section frame 6. The rear end portions of the side-section frames 5 are coupled to the front-wall portion 15F of the transmission case 15. This means that the housing frame A is a frame body interposed between the first front frame 2 and the transmission case 15.

### [How to House Electric Motors in Housing Frame]

How to house the electric motors M1 and M2 will be described based on FIGS. 1 to 5. The electric motors M1 and M2 of this embodiment are placed side by side in the left-right direction inside the housing frame A (between the front-section frame 6 and the front-wall portion 15F and between the right and left side-section frames 5) under the floor 35 of the driving section 3.

As shown in FIG. 4, the battery 4 is placed above the floor 35 of the driving section 3, and the electric motor M1 and the electric motor M2 are placed below the floor 35. As for the battery 4, the battery 4 is placed such that the lower portion of the battery 4 is located at the same position as the position of the floor 35 in the vertical direction (including a case where they are located at substantially the same position). The electric motors M1 and M2 are placed such that their upper portions are located below the floor 35 in the vertical direction. The electric motor M1 and the electric motor M2 are placed on the rear side relative to the first front frame 2.

A flange portion at the rear end portion of the electric motor M1 is coupled to the left portion of the front surface portion of the front-wall portion 15F of the transmission case 15 via a bolt, and a flange portion at the rear end portion of the electric motor M2 is coupled to the right portion of the front-wall portion 15F of the transmission case 15 via a bolt. That is to say, the front-wall portion 15F of the transmission case 15 supports the electric motors M1 and M2 in a cantilever manner. The electric motors M1 and M2 are provided with output shafts extending rearward in the front-rear direction at the positions of the flange portions at the rear end portions of the electric motors M1 and M2.

As shown in FIGS. 4 and 5, a rotation axis X1 of the electric motor M1 and a rotation axis X2 of the electric motor M2 are located at the same position in the vertical direction and extend in parallel in the same direction. Accordingly, the output shaft of the electric motor M1 and the output shaft of the electric motor M2 extend in parallel in the same direction. A front wheel transmission shaft 17 extends along the rotation axis X1 and the rotation axis X2. That is to say, the electric motor M1 and the electric motor M2 are placed such that their output shafts are located at the same height in the vertical direction (including a case where they are located at substantially the same height). In addition, the electric motor M1 and the electric motor M2 are placed such that their output shafts extend in parallel (including a case where they extend in substantially parallel) in the same direction (including a case where they extend in substantially the same direction). The front wheel transmission shaft 17 corresponds to the "transmission shaft".

As shown in FIG. 4, the rotation axis X1 of the electric motor M1 and the rotation axis X2 of the electric motor M2 are located at positions overlapping the lower edge portions of front-rear frame portions 2F of the first front frame 2 in the vertical direction. In other words, the electric motors M1 and M2 are placed such that their rotation axes X1 and X2 are located at the same positions as the positions of the lower edge portions of the front-rear frame portions 2F in the vertical direction (including a case where the rotation axes X1 and X2 are located at substantially the same positions as the positions of the lower edge portions).

The electric motor M1 is provided, inside the housing frame A, on the left side relative to both a recessed portion 6a (see FIGS. 7 and 8) of the front-section frame 6 of the housing frame A and the central portion in the left-right direction of the front-wall portion 15F. The electric motor M2 is provided on the right side relative to both the recessed portion 6a of the front-section frame 6 of the housing frame A and the central portion in the left-right direction of the front-wall portion 15F.

The width in the left-right direction of the electric motor M1 and the width in the left-right direction of the electric motor M2 are the same. In other words, the width in the radial direction of the electric motor M1 and the width in the radial direction of the electric motor M2 are the same (including a case where they are substantially the same). Also, the width in the front-rear direction of the electric motor M1 and the width in the front-rear direction of the electric motor M2 are the same. In other words, the width in the rotation axis X1 direction of the electric motor M1 and the width in the rotation axis X2 direction of the electric motor M2 are the same (including a case where they are substantially the same). That is to say, the size of the electric motor M1 and the size of the electric motor M2 are the same (including a case where they are substantially the same). Also, the capacity of the electric motor M1 and the capacity of the electric motor M1 are the same (including a case where they are substantially the same). This makes it easy to reduce the production cost, the procurement cost, and the like of the electric motors M1 and M2.

The cases of the electric motor M1 and the electric motor M2 each have a cylindrical shape. The electric motor M1 and the electric motor M2 are spaced apart from each other such that there is a space between the cases of the electric motor M1 and the electric motor M2. The front wheel transmission shaft 17 for transmitting power for travel to the front wheels 10 is passed through this space (see FIGS. 4 and 8).

A power transmission device T transmits power for travel to the front wheels 10. The front wheel transmission shaft 17 extends forward from the power transmission device T. The front-section frame 6, the first front frame 2, the front axle case 10A, and the left and right front wheels 10 are located at the front of the electric motor M1 and the electric motor M2. The front wheel transmission shaft 17 extends from the power transmission device T (transmission case 15) to the front axle case 10A through the space between the electric motor M1 and the electric motor M2, a space in the recessed portion 6a, and a space under the first front frame 2. The front wheel transmission shaft 17 receives power for travel from the power transmission device T and transmits it to the front axle case 10A.

The front wheel transmission shaft 17 extends in the front-rear direction from the power transmission device T (transmission case 15) to the front axle case 10A for the front wheels 10. That is to say, the electric motor M1 and the power transmission device T (transmission case 15) are placed at the rear of the first front frame 2, and the front wheel transmission shaft 17 extends from the power transmission device T (transmission case 15) to the front axle case 10A. In other words, in the first front frame 2, the front wheel transmission shaft 17 extends from the side on which the electric motors M1 and M2 are located to the front axle case 10A, and transmits power for travel to the front wheels 10.

The electric motors M1 and M2 are placed between the front wheels 10 and the power transmission device T. The front wheel transmission shaft 17 is passed between the electric motor M1 and the electric motor M2.

### [Configurations of Inverters and Devices Placed on Outer Sides in Transverse Direction of Body Relative to Inverters]

The left and right inverters 14A and 14B are attached to the left and right side-section frames 5 of the housing frame A. The side-section frame 5 on the left side of the body supports the inverter 14A, and the side-section frame 5 on the right side of the body supports the inverter 14B. That is to say, the housing frame A supports the inverters 14A and 14B.

The battery 4 supplies electric power to the two inverters 14A and 14B. Each of the inverters 14A and 14B receives a direct current from the battery 4 and converts it into a three-phase alternating current.

Based on the operation of the operation member for travel in the work-travel operation member 37, the left inverter 14A converts a direct-current electric power from the battery 4 into an alternating-current electric power, and supplies the alternating-current electric power to the electric motor M1. The electric motor M1 thus operates.

Based on the operation of the operation member for work in the work-travel operation member 37, the right inverter 14B converts a direct-current electric power from the battery 4 into an alternating-current electric power, and supplies the alternating-current electric power to the electric motor M2, and the electric motor M2 thus operates.

The inverter 14A is placed on a side opposite to the side on which the electric motor M1 is located with the side-section frame 5 on the left side of the body being therebetween. The inverter 14B is placed on a side opposite to the side on which the electric motor M2 is located with the side-section frame 5 on the right side of the body being therebetween. That is to say, the inverters 14A and 14B corresponding to the electric motors M1 and M2 are placed on the outer sides of the electric motors M1 and M2 in the left-right direction. The inverters 14A and 14B are placed such that their upper portions are located below the floor 35 in the vertical direction.

The inverters 14A and 14B are placed at the rear of loader attachment portions 8. The loader attachment portions 8 are adjacent to the inverters 14A and 14B in the front-rear direction. That is to say, the inverter 14A is adjacent to the electric motor M1 in the left-right direction and is adjacent to the loader attachment portion 8 on the left side of the body in the front-rear direction. The inverter 14B is adjacent to the electric motor M2 in the left-right direction and is adjacent to the loader attachment portion 8 on the right side of the body in the front-rear direction.

The inverter 14A is located on the inner side in the transverse direction of the body relative to the step 34. In other words, the inverters 14A and 14B overlap the step 34 in a side view of the body.

The inverter 14A includes an energization connection port 14C to which an energization cable for the electric motor M1 is to be connected. The inverter 14B includes an energization connection port 14D to which an energization cable for the electric motor M2 is to be connected.

The energization connection port 14C is provided at the rear edge portion of the inverter 14A, and the energization connection port 14D is provided at the rear edge portion of the inverter 14B. The energization cable is connected to the energization connection port 14C, and an alternating-current electric power is supplied from the energization connection port 14C to the electric motor M1 via the energization cable. The energization cable is connected to the energization connection port 14D, and an alternating-current electric power is supplied from the energization connection port 14D to the electric motor M2 via the energization cable. The energization connection ports 14C and 14D are provided on a side opposite to the side on which the loader attachment portions 8 are located. Thus, when a front loader F is attached to the loader attachment portions 8, a risk is avoided that the front loader F comes into contact with the energization cables extending from the energization connection ports 14C and 14D.

As shown in FIGS. 2 and 5, a valve unit 28 for a hydraulic pipe is adjacent to, on the outer side in the transverse direction of the body, the inverter 14B, and is adjacent to, on the rear side in the front-rear direction of the body, the loader attachment portion 8 on the right side of the body. The valve unit 28 for a hydraulic pipe is placed on the outer side in the transverse direction of the body relative to a reinforcement beam 9, which will be described below. The valve unit 28 for a hydraulic pipe may be coupled to and supported by the side-section frame 5, or may be coupled to and supported by the reinforcement beam 9. Although not illustrated, a connector for a hydraulic pipe is provided in the base end portion of a right arm of the front loader F. The hydraulic pipe extending from the valve unit 28 is to be connected to the connector for a hydraulic pipe in the front loader F. That is to say, the valve unit 28 is configured such that when the front loader F is attached to the loader attachment portions 8, a hydraulic system can be connected to a hydraulic mechanism of the front loader F. When a backhoe is attached to the rear portion of the body 1, the valve unit 28 may be configured such that a hydraulic system can be connected to a hydraulic mechanism of the backhoe.

### [Configuration of Attachment Portion for Attachment of Work Device]

As shown in FIGS. 5 and 8, each of the right and left side-section frames 5 of the housing frame A is provided with an upper attachment portion 5a extending obliquely upward on the upper portion of the front portion of the side-section frame 5, and a lower attachment portion 5a extending obliquely downward on the lower portion of the front portion of the side-section frame 5.

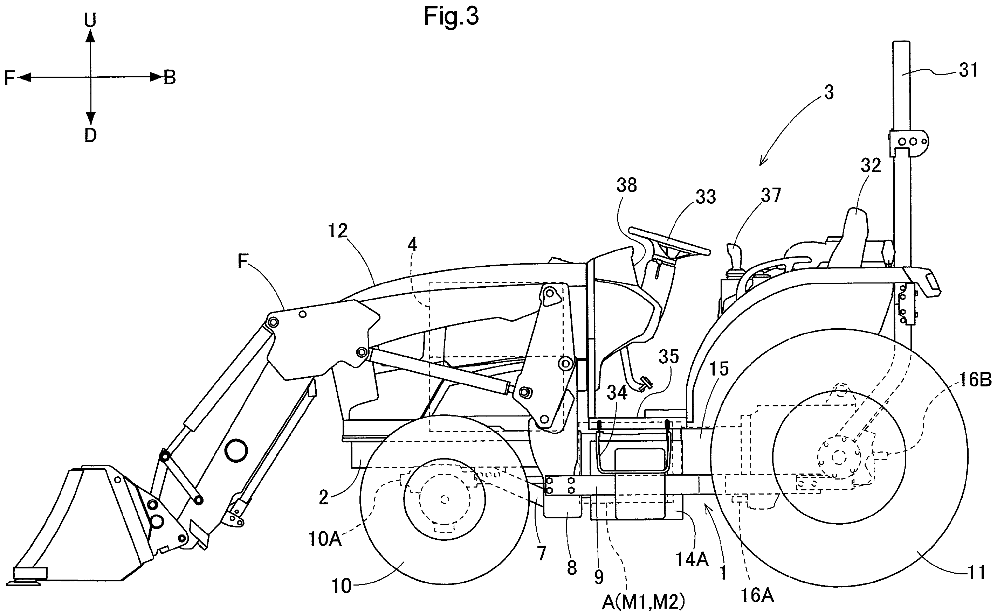

The right loader attachment portion 8 is coupled to the attachment portions 5a of the right side-section frame 5, and the left loader attachment portion 8 is coupled to the attachment portions 5a of the left side-section frame 5. As will be described below, a work device such as the front loader F (see FIG. 3) is attached to the right and left loader attachment portions 8. The work device such as the front loader F is detachably supported by the left and right loader attachment portions 8.

The front portions of the left and right side-section frames 5 support the loader attachment portions 8. The left and right loader attachment portions 8 are located on the outer sides in the transverse direction of the body relative to the side-section frames 5. The front end portions of the left and right loader attachment portions 8 are located on the front side relative to the side-section frames 5. The left and right loader attachment portions 8 are adjacent to the outer end portions in the transverse direction of the front-section frame 6.

The loader attachment portion 8 on the left side of the body is located at the front of the step 34 and is adjacent thereto. The loader attachment portions 8 are placed between the front wheels 10 and the step 34 in the front-rear direction. Also, the loader attachment portions 8 are placed between the battery 4 and the electric motors M1 and M2 in the front-rear direction. The loader attachment portions 8 are placed on the outer sides in the transverse direction of the body relative to the battery 4 in the left-right direction.

As shown in FIG. 3, when the front loader F is attached to the electric tractor, the base end portions of the front loader F are coupled to the loader attachment portions 8. At this time, the front end portions of the reinforcement beams 9 are coupled to the base end portions of the front loader F. The base end portions of the front loader F are each sandwiched between the loader attachment portion 8 and the front end portion of the reinforcement beam 9 in the left-right direction. The left and right reinforcement beams 9 extend in the front-rear direction, and the axle case for the rear wheels 11 in the transmission case 15 supports the rear end portions of the left and right reinforcement beams 9. The left and right reinforcement beams 9 cover the transmission case 15 over the entire length in the front-rear direction from the outer sides in the transverse direction of the body. With this configuration, the durability of the front loader F against a moment load is enhanced. That is to say, the left and right reinforcement beams 9 are coupled to the loader attachment portions 8 and the power transmission device T, and reinforce the support structure for the loader attachment portions 8 for supporting the front loader F. The inverters 14A and 14B are located on the inner sides in the transverse direction of the body relative to the left and right reinforcement beams 9.

### [Configurations of Front Frame and Front Axle Case]

As shown in FIGS. 4 and 5, the electric tractor includes the first front frame 2 that includes portions located on the right and left sides of the body. The first front frame 2 is coupled to the upper portion of the front surface portion of the front-section frame 6 of the housing frame A, and extends forward.

As shown in FIG. 4, second front frames 7 are coupled to potions at the center in the front-rear direction of the first front frame 2 and the lower portion of the front-section frame 6, and connect them. Under the first front frame 2, the rear portions of the second front frames 7 are coupled to the lower portion of the front surface portion of the front-section frame 6 of the housing frame A. The front portions of the second front frames 7 are coupled to the intermediate portions in the front-rear direction of the first front frame 2.

The battery 4 is attached to the upper portion of the first front frame 2, and the rear end portion of the battery 4 is located on the front side relative to the front end portions of the electric motors M1 and M2. A portion at the center in the front-rear direction and the left-right direction of the front axle case 10A is attached to the front lower portions of the first front frames 2 in a rollable manner. The first front frame 2 is rollable relative to the left and right front wheels 10. The front axle case 10A (front wheels 10) is provided under the battery 4 on the front side relative to the electric motors M1 and M2.

A plate-shaped cover 7P is attached so as to extend from the right second front frame 7 to the left second front frame 7. The front portions of the second front frames 7 and the cover 7P are located higher than the rear portions of the second front frames 7 and the cover 7P in a side view of the body. That is to say, the second front frames 7 and the cover 7P are inclined such that the front portions thereof rise.

The rear end portion of the first front frame 2 is coupled to the upper portion of the front-section frame 6. The first front frame 2, the front-section frame 6, and the second front frames 7 form triangular frames in a side view of the body. This reinforces the frame structure in the front portion of the body of the tractor.

The left and right portions of the first front frame 2, the left and right second front frames 7, and the cover 7P have the same width W2 in the left-right direction. The width W1 in the left-right direction of the housing frame A is larger than the width W2 in the left-right direction of the left and right portions of the first front frame 2, the left and right second front frames 7, and the cover 7P.

In a plan view, the rotation axis X1 of the electric motor M1 is close to the portion of the first front frame 2 on the left side of the body and the second front frame 7 on the left side of the body in the left-right direction of the body 1. The rotation axis X2 of the electric motor M2 is close to the portion of the first front frame 2 on the right side of the body and the second front frame 7 on the right side of the body in the left-right direction of the body 1. Thus, the width W2 in the left-right direction of the left and right portions of the first front frame 2, the left and right second front frames 7, and the cover 7P is substantially the same as the width (distance) in the left-right direction of (between) the rotation axes X1 and X2 of the output shafts of the electric motors M1 and M2.

### [Configuration of Power Transmission Device]

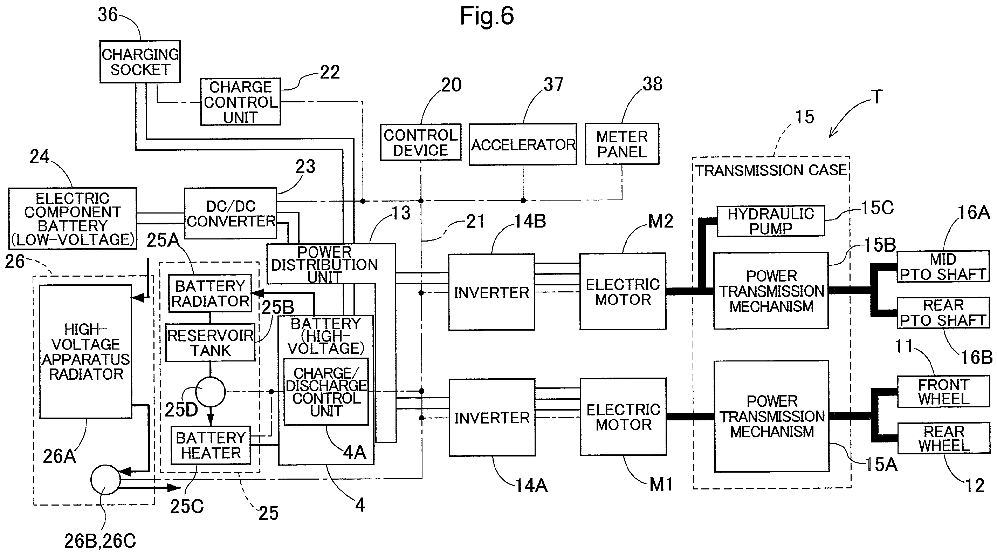

As shown in FIG. 6, the power transmission device T includes a power transmission mechanism 15A for travel, a power transmission mechanism 15B for work, and a hydraulic pump 15C. The transmission case 15 houses the power transmission mechanism 15A for travel, the power transmission mechanism 15B for work, and the hydraulic pump 15C. That is to say, the power transmission device T has the transmission case 15, the power transmission mechanism 15A for travel, the power transmission mechanism 15B for work, and the hydraulic pump 15C. The power transmission mechanism 15A for travel corresponds to the "first power transmission mechanism". The power transmission mechanism 15B for work corresponds to the "second power transmission mechanism". The hydraulic pump 15C is an example of the "output unit for work".

The power transmission mechanism 15A for travel receives rotative power from the electric motor M1, and transmits the rotative power to the left and right front wheels 10 and the left and right rear wheels 11 while changing the speed using a gear-type speed change mechanism. Thus, the left and right front wheels 10 and the left and right rear wheels 11 are driven to rotate by power for travel supplied from the electric motor M1. That is to say, the power transmission mechanism 15A for travel transmits power for travel from the electric motor M1 to the front wheels 10 and the rear wheels 11. In other words, the left and right front wheels 10 and the left and right rear wheels 11 are driven based on the electric power for travel.

The electric tractor includes a mid PTO shaft 16A and a rear PTO shaft 16B. The power transmission mechanism 15B for work receives rotative power from the electric motor M2 and distributes the rotative power to the mid PTO shaft 16A and the rear PTO shaft 16B. Thus, the mid PTO shaft 16A and the rear PTO shaft 16B are driven to rotate.

If a work device is connected to the mid PTO shaft 16A or the rear PTO shaft 16B, the work device will be driven by rotative power of the mid PTO shaft 16A or the rear PTO shaft 16B. That is to say, the power transmission mechanism 15B for work transmits power for work from the electric motor M2 to the mid PTO shaft 16A and the rear PTO shaft 16B. Then, the mid PTO shaft 16A and the rear PTO shaft 16B supply the power for work to the work device.

The hydraulic pump 15C receives rotative power from the electric motor M2 and is thus driven to rotate. The hydraulic pump 15C is a driving source for the hydraulic system in the electric tractor. Accordingly, when, for example, the front loader F is attached to the tractor, the hydraulic pump 15C pumps a hydraulic fluid, and the front loader F operates based on the hydraulic pressure of the hydraulic fluid. That is to say, the hydraulic pump 15C supplies hydraulic pressure for work to the work device.

As described above, the power transmission device T functions as a device for transmitting power for travel, a device for transmitting power for work, and a device for hydraulic drive. That is to say, the power transmission device T includes the power transmission mechanism 15A for travel for transmitting power supplied from the electric motor M1 to the front wheels 10 and the rear wheels 11, the power transmission mechanism 15B for work for transmitting power supplied from the electric motor M2 to the mid PTO shaft 16A and the rear PTO shaft 16B, and the hydraulic pump 15C for hydraulic drive. The power transmission device T is placed at the rear of the electric motor M1 and the electric motor M2.

The work device to be connected to the mid PTO shaft 16A may be, for example, a grass cutting device, a rotary rake, a leaf cutting device, a sprinkling device, or the like. The mid PTO shaft 16A may be used as a front PTO shaft for a work device to be attached to the front portion of the body 1. The work device to be connected to the rear PTO shaft 16B may be a cultivator, a seeding device, a planter, a fertilizing device, a leaf cutting device, a sprinkling device, a grass cutting device, a baler, a mulcher, a stone picker, a rotary rake, a tedder, a traction-type harvest screening device, a bud nipping device, an intertillage management device, a ridging device, or the like.

### [Electric Tractor Driving System]

As shown in FIG. 6, the electric tractor includes a control device 20 for controlling the drive of the electric motors M1 and M2 in accordance with the operation of the work-travel operation member 37. The control device 20 is a core element of an electric tractor control system, and is a cluster of a plurality of ECUs.

The control device 20 is connected to a charge/discharge control unit 4A of the battery 4, the inverters 14A and 14B, the electric motors M1 and M2, a charge control unit 22, a DC/DC converter 23, the work-travel operation member 37, the display unit 38, and the like via, for example, a CAN (Controller Area Network) signal harness 21 so as to be capable of data communication therewith.

The control device 20 outputs instruction signals to the inverters 14A and 14B in accordance with instructions from the work-travel operation member 37. In accordance with the instruction signals from the control device 20, the inverter 14A adjusts three-phase alternating-current electric power (the voltage value, the frequency, the electric current value, and the like) supplied from the battery 4 to the electric motor M1 and controls the output of the electric motor M1. Similarly, in accordance with the instruction signals from the control device 20, the inverter 14B adjusts three-phase alternating-current electric power supplied from the battery 4 to the electric motor M2 and controls the output of the electric motor M2.

The control device 20 controls the operations of the display unit 38. Thus, the display unit 38 displays the operation states of the electric motors M1 and M2, information about the battery 4, and the like.

The battery 4 is, for example, a lithium ion battery. Although not illustrated, the battery 4 is formed by stacking a large number of low-voltage small unit batteries (cells). The output voltage of the battery 4 is, for example, 400 volts. The unit batteries (cells) are housed in a housing case. The unit batteries (cells) are hermetically sealed in the housing case.

An energization connection is established between the battery 4 and a power distribution unit 13. Also, an energization connection is established between the power distribution unit 13 and each of the inverters 14A and 14B and the DC/DC converter 23. Thus, the power distribution unit 13 functions as a hub for distributing power supplied from the battery 4 to the inverters 14A and 14B and the DC/DC converter 23. Also, the power distribution unit 13 is connected to the charging socket 36 via the charge control unit 22. The power distribution unit 13 receives charging electric power from the charging socket 36 and supplies it to the battery 4.

The battery 4 includes the charge/discharge control unit 4A. The charge/discharge control unit 4A controls discharging electric current, charging electric current, and the like of the battery 4 based on output voltage, received voltage, generated heat temperature, and the like of the battery 4.

The battery 4 outputs a large amount of electric power to the inverters 14A and 14B, and therefore, the battery 4 also generates a large amount of heat. Temperature control for appropriately controlling the charge amount and discharge amount of the battery 4 is also important. For this purpose, the battery 4 has a water-cooling-type temperature-controlling channel therein. A battery temperature-controlling device 25 for supplying a liquid coolant to this temperature-controlling channel is provided near the battery 4.

The battery temperature-controlling device 25 includes a battery radiator 25A, a reservoir tank 25B, a battery heater 25C, and a pump 25D. The coolant is stored in the reservoir tank 25B. The pump 25D pumps the coolant for cooling the battery 4. The battery heater 25C raises the temperature of the battery 4 by heating the coolant. In response to the operation of the pump 25D, the coolant circulates through the battery heater 25C, the pump 25D, the temperature-controlling channel inside the battery 4, and the battery radiator 25A in this order starting from the reservoir tank 25B. In this manner, the battery temperature-controlling device 25 controls the temperature of the battery 4.

The battery heater 25C is provided between the pump 25D and the inlet of the temperature-controlling channel inside the battery 4. When the temperature of the battery 4 is low, electric current for charging or discharging the battery 4 decreases. When the electric tractor is started in such a state, the charge/discharge control unit 4A operates the battery heater 25C to heat the coolant. Thus, the temperature of the battery 4 is rapidly raised to a temperature suitable for charging/discharging.

The battery radiator 25A is provided between the outlet of the temperature-controlling channel inside the battery 4 and the reservoir tank 25B. Accordingly, the coolant heated in the temperature-controlling channel inside the battery 4 is cooled in the battery radiator 25A and is returned to the reservoir tank 25B.

An energization connection is established between the circuit of the charge control unit 22 and each of the charging socket 36 and the power distribution unit 13. The charge control unit 22 may be, for example, a power module or PLC (programmable logic controller) having a microcomputer that executes a program based on control signals from the control device 20, or a relay circuit that operates based on electric signals from the control device 20. The charge control unit 22 controls charging voltage or charging electric current for the battery 4 during charging (including rapid charging) of the battery 4. The charge control unit 22 controls electric power received from the charging socket 36 and supplies the controlled electric power to the battery 4 as charging electric power.

The electric tractor includes, in addition to the battery 4, an electric component battery 24 for supplying electric power to the control device 20 and other electric components. The electric component battery 24 is, for example, a lead battery. The electric component battery 24 supplies low-voltage (e.g., 12-V) electric power to operate the electric components. The output voltage of the electric component battery 24 is lower than the output voltage of the battery 4.

The electric component battery 24 is charged with electric power supplied by the battery 4 via the DC/DC converter 23. The DC/DC converter 23 can lower the voltage of the battery 4 to the voltage of the electric component battery 24 and then supply electric power to low-voltage electric components. The DC/DC converter 23 can also supply electric power to the electric component battery 24. That is to say, an energizing connection is established between the DC/DC converter 23 and each of the battery 4 and the electric component battery 24, and the DC/DC converter 23 can receive electric power from the battery 4, lower the voltage, and supply the resulting electric power to the electric component battery 24. Accordingly, the battery 4 can supply electric power to the electric component battery 24 and charge the electric component battery 24. In other words, the electric component battery 24 can be charged with electric power received from the battery 4 via the DC/DC converter 23.

Temperatures of high-voltage devices that receive electric power from the battery 4 at high voltage tend to rise due to generated heat. Thus, the electric tractor includes a high-voltage apparatus cooling device 26 for cooling high-voltage devices. The high-voltage apparatus cooling device 26 includes a high-voltage apparatus radiator 26A and pumps 26B and 26C. The pumps 26B and 26C are connected in series. The pumps 26B and 26C pump a coolant for cooling high-voltage devices such as the inverters 14A and 14B, the electric motors M1 and M2, and the DC/DC converter 23, which operate based on electric power. In response to the operation of the pumps 26B and 26C, the coolant flows through cooling channels in the high-voltage devices such as the inverters 14A and 14B, the electric motors M1 and M2, and the DC/DC converter 23, and cools the high-voltage devices. The high-voltage apparatus radiator 26A cools the coolant heated by the high-voltage devices. The order of the cooling channels in the high-voltage devices can be changed as appropriate.

### [Reinforcement Structure for Battery Support in Front Frame]

As described above, the first front frame 2 and the second front frames 7 support the battery 4.

As shown in FIGS. 7 and 8, the first front frame 2 includes the left and right front-rear frame portions 2F, left and right inner reinforcement frames 2R, left and right supplementary frames 2H, a cover 2P, and a coupling plate 2T. The front-rear frame portion 2F on the right side of the body supports a portion of the battery 4 on the right side of the body from below. The front-rear frame portion 2F on the left side of the body supports a portion of the battery 4 on the left side of the body from below. Although not illustrated, the left and right front-rear frame portions 2F support the front axle case 10A in a rollable manner via a horizontal frame that is coupled to both the left and right front-rear frame portions 2F and extends in the left-right direction. That is to say, the left and right front-rear frame portions 2F support both the battery 4 and the front axle case 10A.

The front-rear frame portions 2F extend in the front-rear direction of the body 1, and the front axle case 10A is located under the central portions in the front-rear direction of the front-rear frame portions 2F. In other words, the front-rear frame portions 2F extend in the front-rear direction with the central portions in the front-rear direction thereof supporting the front axle case 10A.

The battery 4 tends to become heavier as the capacity of the battery 4 increases. As shown in FIGS. 5, 7, and 8, in this embodiment, the inner reinforcement frame 2R on the left side of the body is coupled to the rear portion of the front-rear frame portion 2F on the left side of the body, and the inner reinforcement frame 2R on the right side of the body is coupled to the rear portion of the front-rear frame portion 2F on the right side of the body. In FIGS. 7 and 8, the left and right inner reinforcement frames 2R are surrounded by thick lines.

The rear end portions of the inner reinforcement frames 2R are coupled to the front-section frame 6 extending in the transverse direction. The entire portion between the front portion and the rear portion of each of the left and right inner reinforcement frames 2R is coupled to the front-rear frame portion 2F that is adjacent thereto on the outer side in the transverse direction of the body. In other words, the entire portion between the front portion and the rear portion of the inner reinforcement frame 2R supports the front-rear frame portion 2F.

The left and right inner reinforcement frames 2R are located on the inner sides in the transverse direction of the body relative to the left and right front-rear frame portions 2F. In other words, the left and right front-rear frame portions 2F in the first front frame 2 are located on the outer side in the transverse direction of the body relative to the inner reinforcement frames 2R.

The thicknesses in the left-right direction of the left and right inner reinforcement frames 2R increase toward the rear side. That is to say, the widths of the left and right inner reinforcement frames 2R in the left-right direction of the body 1 increase toward the rear side (the side on which the front-section frame 6 is located). The rear portions of the left and right inner reinforcement frames 2R extend to positions lower than the front portions of the left and right inner reinforcement frames 2R in the vertical direction. In other words, the rear portions of the left and right inner reinforcement frames 2R are thicker in the vertical direction than the front portions. As described above, the left and right inner reinforcement frames 2R are coupled to the front-rear frame portions 2F that are adjacent thereto on the outer side in the transverse direction of the body, and reinforce the support structure for the battery 4.

The left and right inner reinforcement frames 2R each include an extension portion 2s. The extension portions 2s are provided in the upper portions of the left and right inner reinforcement frames 2R and extend in the left-right direction of the body toward the inner side in the transverse direction of the body. The plate-shaped coupling plate 2T is coupled to the extension portions 2s. With this configuration, the rigidity of the rear portion of the first front frame 2 is enhanced.

The front end portions of the inner reinforcement frames 2R are located on the rear side relative to the front axle case 10A. The front portions of the inner reinforcement frames 2R overlap the front portions of the second front frames 7 in the front-rear direction. The supplementary frames 2H are provided at the positions at which the front portions of the inner reinforcement frames 2R and the front portions of the second front frames 7 are located. The supplementary frames 2H are each coupled to the front-rear frame portion 2F, the inner reinforcement frame 2R, and the second front frame 7. That is to say, the front portions of the inner reinforcement frames 2R and the front portions of the second front frames 7 are coupled together via the supplementary frames 2H. With this configuration, the support structure at the rear portion of the first front frame 2 is strengthened.

### [Support Structure for Coolant Apparatus in Front Frame]

As shown in FIGS. 7 and 8, in this embodiment, the pumps 26B and 26C and the battery heater 25C are placed in a space between the battery 4 and the front axle case 10A as well as between the left and right front-rear frame portions 2F of the first front frame 2. The pumps 26B and 26C and the battery heater 25C are placed, in the vertical direction, between the battery 4 and the front wheel transmission shaft 17 extending in the front-rear direction. The pump 25D, the pumps 26B and 26C, and the battery heater 25C are placed below the battery 4 on the front side in the front-rear direction of the body relative to the electric motors M1 and M2.

The pumps 25D and 26B for the coolant are fixed to the front-rear frame portion 2F on the left side of the body with bolts. The pump 26C is fixed to the second front frame 7 on the left side of the body with a bolt. The pump 26B is placed at the rear of the pump 25D, and the pump 26C is placed at the rear of the pump 26B. The power steering unit 27 is placed at the right of the pump 25D.

The battery heater 25C, the pump 25D, and the pump 26B are placed between the left and right front-rear frame portions 2F in the left-right direction. The battery heater 25C, the pump 25D, and the pump 26B are placed, in the vertical direction, between the upper edge portion and the lower edge portion of the front-rear frame portion 2F on the left side of the body as well as between the upper edge portion and the lower edge portion of the front-rear frame portion 2F on the right side of the body. In this state, the cover 2P is coupled to the lower edge portions of the left and right front-rear frame portions 2F. The cover 2P covers a space below the battery 4 and between the left and right front-rear frame portions 2F from below. Accordingly, the left and right front-rear frame portions 2F, the battery 4, and the cover 2P surround the pump 25D from the upper, lower, left, and right sides. This makes it less likely that the pump 25D comes into contact with foreign matter in the vertical direction and the left-right direction.

The battery heater 25C is fixed to the lower surface portion of the coupling plate 2T with a bolt. That is to say, the left and right inner reinforcement frames 2R support the battery heater 25C via the coupling plate 2T. The pump 25D is placed at the front portion of the first front frame 2. That is to say, the first front frame 2 supports the battery heater 25C and the pump 25D of the battery temperature-controlling device 25.

The battery heater 25C and the pumps 25D and 26B are placed between the left and right inner reinforcement frames 2R in the left-right direction, and are located between the upper edge portions and the lower edge portions of the left and right inner reinforcement frames 2R in the vertical direction. The battery heater 25C and the pumps 25D and 26B are placed between the battery 4 and the front axle case 10A in the vertical direction. In addition, the battery heater 25C and the pump 26B are placed between the electric motors M1 and M2 and the front axle case 10A in the front-rear direction.

The pump 26C is placed at a position higher than the positions of the lower edge portions of the left and right second front frames 7. In this state, the cover 7P is coupled to the lower edge portions of the left and right second front frames 7. The cover 7P covers a space below the battery 4 and between the left and right second front frames 7 from below. With this configuration, the left and right front-rear frame portions 2F, the left and right second front frames 7, the battery 4, the coupling plate 2T, and the cover 7P surround the pumps 26B and 26C and the battery heater 25C from the upper, lower, left, and right sides. This makes it less likely that the pumps 26B and 26C and the battery heater 25C come into contact with foreign matter in the vertical direction and the left-right direction.

### [Other Embodiments]

The present invention is not limited to the configurations embodied in the above embodiment, and other typical embodiments of the present invention will be described as examples below.
(1) In the above embodiment, the size of the electric motor M1 for travel and the size of the electric motor M2 for work and hydraulic drive are the same, but may be substantially the same. Specifically, the width in the radial direction of the electric motor M1 and the width in the radial direction of the electric motor M2 may be substantially the same, or the width in the rotation axis X1 direction of the electric motor M1 and the width in the rotation axis X2 direction of the electric motor M2 may be substantially the same. The electric motor M1 and the electric motor M2 may be of different types, or the electric motor M1 and the electric motor M2 may have different capacities.
(2) In the above embodiment, the front-wall portion 15F supports the electric motor M1 and the electric motor M2 in a cantilever manner, but there is no limitation to this embodiment. For example, the front-section frame 6 may support the front portions of the electric motor M1 and the electric motor M2, or the first front frame 2 may support them.
(3) In the above embodiment, the power transmission device T is placed at the rear of the electric motor M1 and the electric motor M2, but there is no limitation to this embodiment. For example, when the electric tractor is of a four-wheel steering type, the power transmission device T may be placed at the front of the electric motor M1 and the electric motor M2, or may be placed between the electric motor M1 and the electric motor M2. The front wheel transmission shaft 17 need not be passed between the electric motor M1 and the electric motor M2. The "transmission shaft" may be a shaft for transmission to the rear wheels 11.
(4) In the above embodiment, the power transmission system for travel and the power transmission system for work are completely independent drive systems, but there is no limitation to this embodiment. For example, a configuration may be employed in which a clutch is interposed between the power transmission mechanism 15A for travel and the power transmission mechanism 15B for work, and the electric motor M1 for travel can assist the torque of the electric motor M2 for work and hydraulic drive. Also, a configuration may be employed in which the electric motor M2 for work and hydraulic drive can assist the torque of the electric motor M1 for travel.
(5) In the above embodiment, the "travel device" includes the front wheels 10 and the front axle case 10A. There is no limitation to this embodiment, and the "travel device" may be a wheel-turning mechanism having a crawler (including a semi-crawler).
(6) In the above embodiment, the electric motor M2 is for both work and hydraulic drive. There is no limitation to this embodiment, and the electric motor M2 may be used for one of work and hydraulic drive.
(7) In the above embodiment, the battery 4 stores electric power for travel, work, and hydraulic drive. There is no limitation to this embodiment, and, for example, the battery 4 supported by the first front frame 2 may store electric power for at least one of travel, work, and hydraulic drive. In this case, a battery that stores electric power for an application other than the at least one application described above may be placed at another position in the electric tractor.

The configurations disclosed in the above embodiment (including alternative embodiments; the same applies below) are applicable in combination with the configurations disclosed in the other embodiments so long as no inconsistencies arise. The embodiments disclosed herein are illustrative, and embodiments of the present invention are not limited thereto. Appropriate changes and modifications may be made without departing from the object of the present invention.

### Industrial Applicability

The present invention is applicable to electric tractors.

### Description of Reference Signs

- 3: Driving section
- 4: Battery
- 10: Front wheel (travel device)
- 10A: Front axle case (travel device)
- 15: Transmission case (housing case)
- 15A: Power transmission mechanism (first power transmission mechanism)
- 15B: Power transmission mechanism (second power transmission mechanism)
- 15C: Hydraulic pump (output unit for work)
- 15F: Front-wall portion (front portion of housing case)
- 16A: Mid PTO shaft (output unit for work)
- 16B: Rear PTO shaft (output unit for work)
- 17: Front wheel transmission shaft (transmission shaft)
- 35: Floor
- M1: Electric motor (first electric motor)
- M2: Electric motor (second electric motor)
- T: Power transmission device
- X1: Rotation axis of first electric motor
- X2: Rotation axis of second electric motor

## Claims

1. An electric tractor comprising:
- a battery that stores electric power;
- a first electric motor for travel that is driven by electric power supplied from the battery; and
- a second electric motor for at least one of work and hydraulic drive that is driven by electric power supplied from the battery,
wherein the first electric motor and the second electric motor have the same or substantially the same size.

2. The electric tractor according to claim 1, wherein the first electric motor and the second electric motor have the same or substantially the same capacity.

3. The electric tractor according to claim 1 or 2, comprising:
a power transmission device for transmitting power for at least one of the travel and the work,
wherein the power transmission device is placed at the rear of the first electric motor and the second electric motor.

4. The electric tractor according to claim 3, wherein
- the power transmission device has a power transmission mechanism for transmitting the power, and a housing case for housing the power transmission mechanism, and
- the first electric motor and the second electric motor are supported by a front portion of the housing case in a cantilever manner.

5. The electric tractor according to claim 3 or 4, comprising:
- a travel device that is driven by the power for the travel; and
- an output unit for work that supplies the power for the work to a work device,
wherein the power transmission device includes a first power transmission mechanism for transmitting power supplied from the first electric motor to the travel device, and a second power transmission mechanism for transmitting power supplied from the second electric motor to the output unit for work.

6. The electric tractor according to any one of claims 1 to 5, wherein the first electric motor and the second electric motor are placed with their output shafts being located at the same or substantially the same height.

7. The electric tractor according to any one of claims 1 to 6, wherein the first electric motor and the second electric motor are placed with their output shafts extending in parallel in the same direction, or in substantially parallel in substantially the same direction.

8. The electric tractor according to any one of claims 1 to 7, wherein the first electric motor and the second electric motor are placed side by side in a left-right direction.

9. The electric tractor according to claim 8, comprising:
a driving section having a floor on which a driver gets on,
wherein the first electric motor and the second electric motor are placed with their upper portions being located at the same position as a position of the floor or below the floor in a vertical direction.

10. The electric tractor according to claim 8 or 9, wherein a width in a radial direction of the first electric motor and a width in a radial direction of the second electric motor are the same or substantially the same.

11. The electric tractor according to any one of claims 8 to 10, wherein a width in an axial direction of the first electric motor and a width in an axial direction of the second electric motor are the same or substantially the same.

12. The electric tractor according to any one of claims 8 to 11, comprising:
- a travel device that is driven by power for the travel;
- a power transmission device for transmitting the power for the travel to the travel device; and
- a transmission shaft for transmitting the power for the travel received from the power transmission device to the travel device,
wherein
- the first electric motor and the second electric motor are placed between the travel device and the power transmission device, and
- the transmission shaft is passed between the first electric motor and the second electric motor.

13. The electric tractor according to any one of claims 1 to 12, wherein the first electric motor and the second electric motor are placed on a rear side in a front-rear direction of a body relative to the battery.
